(19) Europäisches Patentamt
European Patent Office
Office européen des brevets

(11) Veröffentlichungsnummer: **0 355 603 B1**

# (12) EUROPÄISCHE PATENTSCHRIFT

(45) Veröffentlichungstag der Patentschrift: **20.04.94**

(51) Int. Cl.$^5$: **C08F 297/08**

(21) Anmeldenummer: **89114820.7**

(22) Anmeldetag: **10.08.89**

## (54) Verfahren zum Herstellen von Propylen-Ethylen-Polymerisaten vom Typ der sogenannten "schlagzähmodifizierten Polypropylene".

(30) Priorität: **13.08.88 DE 3827565**

(43) Veröffentlichungstag der Anmeldung:
**28.02.90 Patentblatt 90/09**

(45) Bekanntmachung des Hinweises auf die Patenterteilung:
**20.04.94 Patentblatt 94/16**

(84) Benannte Vertragsstaaten:
**AT BE DE ES FR GB IT NL**

(56) Entgegenhaltungen:
**EP-A- 0 125 590**
**EP-A- 0 306 867**
**GB-A- 1 032 945**

(73) Patentinhaber: **BASF Aktiengesellschaft**
**Carl-Bosch-Strasse 38**
**D-67063 Ludwigshafen(DE)**

(72) Erfinder: **Kerth, Juergen, Dr.**
**Wattenheimer Strasse 15**
**D-6719 Carlsberg(DE)**
Erfinder: **Werner, Rainer Alexander, Dr.**
**Salinenstrasse 143**
**D-6702 Bad Duerkheim(DE)**
Erfinder: **Zolk, Ralf, Dr.**
**Weinbietstrasse 7**
**D-6714 Weisenheim(DE)**
Erfinder: **Ruempler, Klaus-Dieter, Dr.**
**Erlenweg 4**
**D-6706 Wachenheim(DE)**
Erfinder: **Schweier, Guenther, Dr.**
**Friedrich-Pietzsch-Strasse 14**
**D-6701 Friedelsheim(DE)**
Erfinder: **Mueller-Mall, Rudolf, Dr.**
**Ulmenweg 39**
**D-6708 Neuhofen(DE)**
Erfinder: **Gruber, Wolfgang, Dr.**
**Lorscher Ring 2 b**
**D-6710 Frankenthal(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum kontinuierlichen Herstellen von Propylen-Ethylen-Polymerisaten vom Typ der sogenannten "schlagzähmodifizierten Polypropylene", wobei man jeweils in Anwesenheit von Wasserstoff als Molekulargewichtsregler in einem bewegten Festbett aus kleinteiligem Polymerisat bei Abwesenheit eines flüssigen Reaktionsmediums aus der Gasphase heraus zunächst

(A) in einer ersten Polymerisationszone Propylen durch Zufuhr eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$Al\ R_3$,

worin steht

R für einen nicht mehr als 8, insbesondere nicht mehr als 4 Kohlenstoffatome aufweisenden Alkylrest, sowie

(3) einer Silankomponente der Formel

$R^1_n\ Si(OR^2)_{4-n}$,

worin stehen

$R^1$ für einen nicht mehr als 16, vorzugsweise nicht mehr als 10 Kohlenstoffatome aufweisenden Kohlenwasserstoffrest gesättigt-aliphatischer und/oder aromatischer Natur,

$R^2$ für einen nicht mehr als 15, vorzugsweise nicht mehr als 8, und insbesondere nicht mehr als 4 Kohlenstoffatome aufweisenden Alkylrest, und

n für eine Zahl von 0 bis 3, vorzugsweise von 0 bis 2, und insbesondere die Zahl 1 oder 2,

homopolymerisiert, mit den Maßgaben, daß (i) das Atomverhältnis Titan aus der Titan-Komponente (1) : Aluminium aus der Aluminiumalkyl-Komponente (2) im Bereich von 1:10 bis 1:500, insbesondere 1:20 bis 1:200 liegt, (ii) das Molverhältnis Aluminiumalkyl-Komponente (2) : Silankomponente (3) 1:0,01 bis 1:0,5, insbesondere 1:0,02 bis 1:0,2 beträgt und (iii) pro Millimol der Aluminiumalkyl-Komponente (2) 0,05 bis 2, insbesondere 0,2 bis 1 kg Polymerisat erzeugt werden, und dann

(B) in einer zweiten Polymerisationszone ein Gemisch aus Propylen und Ethylen durch Zufuhr des in der ersten Polymerisationszone erhaltenden Reaktionsgutes dem darin vorliegenden Propylen-Homopolymeren hinzupolymerisiert.

Ein im gegebenen Zusammenhang besonders interessierendes Verfahren dieser Gattung ist bekannt geworden aus der US-PS 4 455 405.

Bei diesem Verfahren wird so gearbeitet, daß man - jeweils in einem bewegten Festbett aus kleinteiligem Polymerisat aus der Gasphase heraus - in zwei aufeinanderfolgenden Polymerisationszonen durch Zufuhr eines Ziegler-Natta-Katalysatorsystems unter verhältnismäßig milden Polymerisationsbedingungen in der zweiten Polymerisationszone Propylen-Ethylen-Polymerisate herstellt. Das Verfahren besitzt den Nachteil, daß die daraus resultierenden Produkte aufgrund der relativ geringen, in der zweiten Polymerisationszone gebildeten Polymerisatanteile nur mäßige Kerbschlagzähigkeiten, insbesondere bei tiefen Temperaturen aufweisen.

Weitere Verfahren der in Rede stehenden Gattung sind in einer Reihe von Varianten bekannt geworden, wobei z.B. auf die US-PS 4 454 299 sowie die ZA-PSen 0084/3561, 0084/3563 und 0084/5261 als repräsentative Publikationen verwiesen werden kann.

Diese bekannten Verfahren sowie insbesondere auch die resultierenden Verfahrensprodukte haben sich, übers Ganze gesehen, in der Technik bewährt; - was indessen nicht ausschließt, daß noch der eine oder andere Wunsch offenbleibt. So sind die bekannten Verfahren - sofern anwendungstechnisch besonders hochwertige Polymerisate erzeugt werden sollen - im kontinuierlichen Betrieb noch anfällig gegen Störungen, z.B. durch Brocken- und Belagbildung im Reaktor, und/oder die erzeugten Polymerisate haben noch durch das eingesetzte Katalysatorsystem einen relativ hohen Gehalt an - unerwünschten - anorganischen Nebenbestandteilen.

Hier setzt die Aufgabe an, die zur vorliegenden Erfindung geführt hat: Das eingangs definierte Verfahren so zu verbessern, daß es mit den vorerwähnten Nachteilen nicht mehr oder nur noch in erheblich vermindertem Maße belastet ist.

Es wurde gefunden, daß die gestellte Aufgabe gelöst werden kann, wenn man

($\alpha$) eine besondere Titan-Komponente (1) einsetzt, des weiteren

($\beta$) unter spezifisch ausgewählten Polymerisations-Parametern und Relationen von erster zur zweiten Polymerisationszone arbeitet.

Gegenstand der vorliegenden Erfindung ist dementsprechend ein Verfahren zum kontinuierlichen Herstellen von Propylen-Ethylen-Polymerisaten vom Typ der sogenannten "schlagzähmodifizierten Polypropylene", wobei man jeweils in Anwesenheit von Wasserstoff als Molekulargewichtsregler in einem bewegten Festbett aus kleinteiligem Polymerisat (worunter man in der Fachsprache bekanntlich versteht ein Schüttgutbett aus kleinteiligem Polymerisat, welches durch Rühren in Bewegung gehalten wird) bei Abwesenheit eines flüssigen Reaktionsmediums aus der Gasphase heraus zunächst

(A) in einer ersten Polymerisationszone Propylen durch Zufuhr eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$$Al\ R_3,$$

worin steht

R für einen nicht mehr als 8, insbesondere nicht mehr als 4 Kohlenstoffatome aufweisenden Alkylrest, sowie

(3) einer Silankomponente der Formel

$$R^1_n\ Si(OR^2)_{4-n}\ ,$$

worin stehen

$R^1$ für einen nicht mehr als 16, vorzugsweise nicht mehr als 10 Kohlenstoffatome aufweisenden Kohlenwasserstoffrest gesättigt-aliphatischer und/oder aromatischer Natur

$R^2$ für einen nicht mehr als 15, vorzugsweise nicht mehr als 8, und insbesondere nicht mehr als 4 Kohlenstoffatome aufweisenden Alyklrest, und

n für eine Zahl von 0 bis 3, vorzugsweise von 0 bis 2, und insbesondere die Zahl 1 oder 2,

homopolymerisiert, mit den Maßgaben, daß (i) das Atomverhältnis Titan aus der Titan-Komponente (1) : Aluminium aus der Aluminiumalkyl-Komponente (2) im Bereich von 1:10 bis 1:500, insbesondere 1:20 bis 1:200 liegt, (ii) das Molverhältnis Aluminiumalkyl-Komponente (2) : Silankomponente (3) 1:0,01 bis 1:0,5, insbesondere 1:0,02 bis 1:0,2 beträgt und (iii) pro Millimol der Aluminiumalkyl-Komponente (2) 0,05 bis 2, insbesondere 0,2 bis 1 kg Polymerisat erzeugt werden, und dann

(B) in einer zweiten Polymerisationszone ein Gemisch aus Propylen und Ethylen durch Zufuhr des in der ersten Polymerisationszone erhaltenden Reaktionsgutes dem darin vorliegenden Propylen-Homopolymeren hinzupolymerisiert.

Das erfindungsgemäße Verfahren ist dadurch gekennzeichnet, daß man

($\alpha$)

als Titan-Komponente (1) eine solche einsetzt, die erhalten wird, indem man zunächst

(1.1) in einer ersten Stufe (I) einen Trägerstoff herstellt aus (Ia) einem feinteiligen Kieselgel, das das einen Teilchendurchmesser von 1 bis 1000, vorzugsweise 5 bis 500 und insbesondere 10 bis 200 µm, ein Porenvolumen von 0,3 bis 5,0, insbesondere 1,0 bis 3,0 $cm^3/g$, eine Oberfläche von 100 bis 1000, insbesondere 200 bis 500 $m^2/g$ besitzt, die Formel $SiO_2\ .\ a\ Al_2O_3$ - worin a steht für eine Zahl im Bereich von 0 bis 2, insbesondere 0 bis 0,5 -hat und einen solchen Feuchtigkeitsgehalt aufweist, daß es bei einer Temperatur von 1000 °C im Verlauf von 0,5 Stunden 1 bis 20, vorzugsweise 2 bis 15 und insbesondere 4 bis 10 Gew.% - bezogen auf das anfängliche Gesamtgewicht des Kieselgels - Wasser verliert, (Ib) einer magnesiumorganischen Verbindung der Formel $MgR^3R^4$ - worin $R^3$ und $R^4$ stehen für einen $C_2$- bis $C_{10}$-, vorzugsweise $C_4$- bis $C_8$-Alkylrest - und (Ic) einem gasförmigen Chlorierungsmittel der Formel ClZ -worin Z steht für Cl oder H, vorzugsweise H -, derart, daß man zuerst

(1.1.1) in einer ersten Unterstufe in einem flüssigen inerten Kohlenwasserstoff, insbesondere einem Alkan, unter ständiger Durchmischung bei einer Temperatur von 10 bis 120, insbesondere 20 bis 100 °C das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10, insbesondere 1,5 bis 5 Molteile der magnesiumorganischen Verbindung (Ib), und das Zusammengebrachte während 0,5 bis 5, insbesondere 1 bis 2 Stunden bei einer Temperatur im Bereich von 20 bis 140, insbesondere 60 bis 90 °C, hält, dann

(1.1.2) in einer zweiten unterstufe unter ständiger Durchmischung bei einer Temperatur im Bereich von -20 bis +80, insbesondere 0 bis +60 °C, in das aus der ersten Unterstufe Erhaltene das gasförmige Chlorierungsmittel (Ic) einleitet, wobei mengenmäßig eingesetzt werden auf 1 Molteil der magnesiumorganischen Verbindung (IIb) 2 bis 40, insbesondere 5 bis 20 Molteile des Chlorierungsmittels (Ic), das Ganze 0,5 bis 5, insbesondere 0,5 bis 1 Stunden bei einer Temperatur in dem genannten Bereich beläßt und das dabei resultierende festphasige Produkt -d.i. den Trägerstoff (I) - unter Abtrennung der flüssigen Phase isoliert, daraufhin

(1.2) in einer zweiten Stufe ein festphasiges Zwischenprodukt herstellt aus (I) dem in der ersten Stufe erhaltenen Trägerstoff, (II) einem $C_1$- bis $C_8$-Alkanol, insbesondere Ethanol, (III) Titantetrachlorid sowie (IV) einem Phthalsäureabkömmling der Formel

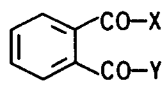

worin stehen X und Y gemeinsam für Sauerstoff oder X sowie Y für Chlor oder einen $C_1$- bis $C_{10}$-, vorzugsweise $C_1$- bis $C_8$-Alkoxyrest, insbesondere für einen Butoxyrest, derart, daß man zuerst

(1.2.1) in einer ersten unterstufe in einem flüssigen inerten Kohlenwasserstoff, insbesondere einem Alkan, unter ständiger Durchmischung bei Raumtemperatur den Trägerstoff (I) und den Alkanol (II) zusammenbringt, wobei mengenmäßig eingesetzt werden auf 1 Molteil Magnesium des Trägerstoffs (I) 1 bis 5, insbesondere 2,5 bis 3,5 Molteile des Alkanols (II), und das Zusammengebrachte während 0,5 bis 5, insbesondere 1 bis 2 Stunden bei einer Temperatur im Bereich von 20 bis 140, insbesondere 70 bis 90 °C hält, anschließend

(1.2.2.) in einer zweiten Unterstufe unter ständiger Durchmischung bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (I) 2 bis 20, insbesondere 4 bis 8 Molteile des Titantetrachlorids (III), das Zusammengebrachte während 0,5 bis 5, insbesondere 1 bis 2 Stunden auf einer Temperatur im Bereich von 10 bis 150, insbesondere 90 bis 120 °C hält und das dabei resultierende festphasige Zwischenprodukt unter Abtrennung der flüssigen Phase isoliert,

mit der Maßgabe, daß zumindest im Zuge einer der Unterstufen (1.2.1) oder (1.2.2) der Phthalsäureabkömmling (IV) eingebracht wird, wobei mengenmäßig eingesetzt werden auf 1 Molteil Magnesium des Trägerstoffs (I) 0,01 bis 1, vorzugsweise 0,1 bis 0,8, insbesondere 0,2 bis 0,6 Molteile des Phthalsäureabkömmlings (IV), dann

(1.3) in einer dritten Stufe das aus der zweiten Stufe erhaltene festphasige Zwischenprodukt bei einer Temperatur im Bereich von 100 bis 150, insbesondere 115 bis 135 °C, während einer Zeitspanne von 0,2 bis 5, insbesondere 1,5 bis 3 Stunden einer ein-oder mehrstufigen oder kontinuierlichen Extraktion mit Titantetrachlorid oder einer Mischung aus Titantetrachlorid und einem bis zu 12, vorzugsweise bis zu 10 Kohlenstoffatome aufweisenden Alkylbenzol, insbesondere Ethylbenzol, deren Gewichtsanteil an Titantetrachlorid mindestens 5, insbesondere mindestens 10 Gew.-%, beträgt, unterzieht, wobei mengenmäßig eingesetzt werden auf 10 Gewichtsteile des aus der zweiten Stufe erhaltenen festphasigen Zwischenprodukts insgesamt 10 bis 1000, vorzugsweise 20 bis 800, insbesondere 40 bis 300 Gewichtsteile des Extraktionsmittels, und schließlich

(1.4) in einer vierten Stufe das in der dritten Stufe entstandene festphasige Produkt solange mit einem flüssigen inerten Kohlenwasserstoff, insbesondere einem Alkan, wäscht, bis der Kohlenwasserstoff weniger als 2, vorzugsweise weniger 1 Gew.% Titantetrachlorid enthält - und derart die Titankomponente (1) gewinnt,

sowie zudem

*β*)

derart polymerisiert, daß

(a) in der ersten Polymerisationszone bei einem Gesamtdruck von 20 bis 40, vorzugsweise 22 bis 35 bar sowie einer Temperatur von 60 bis 90, vorzugsweise 65 bis 80 °C gearbeitet wird, mit der Maßgabe, daß die mittlere Verweilzeit des Polymerisats 1,5 bis 5, vorzugsweise 2,5 bis 4 Stunden beträgt,

(b) in der zweiten Polymerisationszone bei einem Gesamtdruck von 7 bis 25, vorzugsweise 11 bis 20 bar sowie einer Temperatur von 40 bis 70, vorzugsweise 50 bis 60 °C gearbeitet wird, mit der Maßgabe, daß das Verhältnis Propylen-Partialdruck : Ethylen-Partialdruck 100 : 20 bis 100 : 120, vorzugsweise 100 : 30 bis 100 : 60 beträgt,

(c) der Gesamtdruck in der ersten Polymerisationszone um wenigstens 7 bar höher gehalten wird als der Gesamtdruck in der zweiten Polymerisationszone,

(d) das Verhältnis Gewicht des in der ersten Polymerisationszone in Polymerisat umgesetztes Propylen : Gewicht des in der zweiten Polymerisationszone in Polymerisat umgesetztes Gemisch aus Propylen und Ethylen einen Wert zwischen 100 : 40 bis 100 : 150, insbesondere zwischen 100 : 50 bis 100 : 130 hat, und

(e) die mittlere Verweilzeit des Polymerisats in der zweiten Polymerisationszone gleich der mittleren Verweilzeit des Polymerisats in der ersten Polymerisationszone, multipliziert mit dem 0,8- bis 1,2-fachen, vorzugsweise 0,9- bis 1,1-fachen Quotienten stündlicher Austrag an Polymerisat aus der ersten Polymerisationszone : stündlicher Austrag an Polymerisat aus der zweiten Polymerisationszone ist.

Zu dem erfindungsgemäßen Verfahren ist im einzelnen das folgende zu bemerken:
Das Polymerisationsverfahren als solches kann - unter Beachtung der kennzeichnenden Besonderheiten - in praktisch allen einschlägig üblichen technologischen Ausgestaltungen durchgeführt werden. Diese Ausgestaltungen - mit anderen Worten: die technologischen Varianten der kontinuierlichen Gasphasen-Block-Copolymerisation von Propylen/Ethylen in zwei Polymerisationszonen nach Ziegler-Natta - sind wohlbekannt. Ihre Entwicklung spiegelt sich wider in den Verfahren, wie sie zunächst aus der GB-PS 837 301, dann der GB-PS 1 006 469 und schließlich der GB-PS 1 032 945 bekannt geworden sind, - wobei es sich als günstig herausgestellt hat, jede der Stufen (I) und (II) des Verfahrens aus der letztgenannten Patentschrift so auszugestalten wie die Einzelstufe des aus der GB-PS 1 354 020 bekanntgewordenen Verfahrens.

Besondere Ausgestaltungen des in Rede stehenden Verfahrens zu einer Gattung, zu der auch das erfindungsgemäße gehört, sind gleichfalls bekannt, etwa durch die eingangs bereits zitierte US-PS 4 454 299 sowie die ZA-PSen 0084/3561, 0084/3563 und 0084/5261.

Nähere Erläuterungen zu dem erfindungsgemäßen Polymerisationsverfahren als solchem erübrigen sich daher.

Der Vollständigkeit halber ist allenfalls zu erwähnen, daß beim erfindungsgemäßen verfahren die Komponenten des Katalysatorsystems in mannigfacher Weise in die erste Polymerisationszone eingebracht werden können, z.B. (i) die Titan-Komponente (1), die Aluminiumalkyl-Komponente (2) sowie die weitere Katalysatorkomponente (3) alle örtlich gemeinsam, (ii) die gleichen Komponenten alle örtlich getrennt voneinander, (iii) die Komponente (1) einerseits und ein Gemisch aus den Komponenten (2) und (3) andererseits örtlich getrennt voneinander - was von besonderem Vorteil sein kann-, oder (iiii) ein Gemisch aus den Komponenten (1) und (3) einerseits und die Komponente (2) andererseits örtlich getrennt voneinander.

Was die stoffliche Seite des beim erfindungsgemäßen verfahren einzusetzenden Katalysatorsystems betrifft, ist im einzelnen das folgende zu sagen:

(1) Die Titan-Komponente ist von einer besonderen Art; sie ist oben im einzelnen definiert.

(2) Die Alkylaluminium-Komponente kann eine der oben gegebenen Definition entsprechende, einschlägig übliche sein; bevorzugt ist Triethylaluminium.

(3) Die weitere Katalysatorkomponente ist ein spezielles Silan mit der oben wiedergegebenen Formel; das Silan kann - insoweit - ein einschlägig übliches sein.

Im Rahmen der vorliegenden Erfindung haben sich besonders bewährt Toluyltriethoxysilan, Diisopropyldimethoxysilan und Isobutylisopropyldimethoxysilan.

Beispiel

In einer einschlägig üblichen Vorrichtung (einer sog. "Kaskade"; vgl. dazu die GB-PS 1 032 945) wurde kontinuierlich ein Propylen-Ethylen-Polymerisat vom Typ der sogenannten schlagzähmodifizierten Polypropylene hergestellt, indem man jeweils in Anwesenheit von Wasserstoff als Molekulargewichtsregler in einem bewegten Festbett (einem gerührten konzentrischen Festbett) aus kleinteiligem Polymerisat und in Abwesenheit eines flüssigen Reaktionsmediums aus der Gasphase heraus zunächst

(A) in einer ersten Polymerisationszone mit einem Nutzvolumen von 180 l Propylen durch kontinuierliche, getrennt dosierte Zufuhr eines Ziegler-Natta-Katalysatorsystems aus

(1) einer Titan-Komponente,
(2) Aluminiumtriethyl, sowie
(3) Isobutylisopropyldimethoxysilan

homopolymerisierte mit den Maßgaben, daß (i) das Atomverhältnis Titan aus der Titan-Komponente (1) : Aluminium aus der Aluminiumalkyl-Komponente (2) 1 : 100 war, (ii) das Molverhältnis Aluminiumalkyl-Komponente (2) : Silankomponente (3) 1:0,1 betrug und (iii) pro Millimol der Aluminiumalkyl-Komponente (2) 0,4 kg Polymerisat erzeugt wurden, und dann

(B) in einer zweiten Polymerisationszone mit einem Nutzvolumen von 180 l ein Gemisch aus Propylen und Ethylen durch Zufuhr des in der ersten Polymerisationszone erhaltenden Reaktionsgutes dem darin vorliegenden Propylen-Homopolymeren hinzupolymerisierte.

Gemäß der Erfindung wurde das Verfahren im einzelnen wie folgt durchgeführt:

($\alpha$)

Als Titan-Komponente (1) wurde eine solche eingesetzt, die erhalten wird indem man zunächst

(1.1) in einer ersten Stufe (I) einen Trägerstoff herstellt aus (Ia) einem feinteiligen Kieselgel, das einen Teilchendurchmesser von 20 bis 45 µm, ein Porenvolumen von 1,75 $cm^3/g$, eine Oberfläche von 320 $m^2/g$ besitzt, die Formel $SiO_2$ hat und einen solchen Feuchtigkeitsgehalt aufweist, daß es bei einer Temperatur von 1000 °C im Verlauf von 0,5 Stunden 7,4 Gew.% - bezogen auf das anfängliche Gesamtgewicht des Kieselgels - Wasser verliert (Meßmethode: Differential-Thermogravimetrie), (Ib) Butyl-octylmagnesium und (Ic) Chlorwasserstoff, derart, daß man zuerst

(1.1.1) in einer ersten Unterstufe in n-Heptan, unter ständiger Durchmischung mittels Rühren bei Raumtemperatur das feinteilige Kieselgel (Ia) und die magnesiumorganische Verbindung (Ib) zusammenbringt, wobei mengenmäßig eingesetzt werden auf 10 Molteile Silicium des Kieselgels (Ia) 3,3 Molteile der magnesiumorganischen Verbindung (Ib), und das Zuammengebrachte während 1,5 Stunden bei einer Temperatur im Bereich von 90 °C hält, dann

(1.1.2) in einer zweiten Unterstufe unter ständiger Durchmischung mittels Rühren bei einer Temperatur im Bereich von 20 °C in das aus der ersten Unterstufe Erhaltene das gasförmige Chlorierungsmittel (Ic) einleitet, wobei mengenmäßig eingesetzt werden auf 1 Molteil der magnesiumorganischen Verbindung (Ib) 10 Molteile des Chlorierungsmittels (Ic), das Ganze 0,5 Stunden bei einer Temperatur in dem genannten Bereich beläßt und das dabei resultierende festphasige Produkt - d.i. den Trägerstoff (I) -unter Abtrennung der flüssigen Phase isoliert, daraufhin

(1.2) in einer zweiten Stufe ein festphasiges Zwischenprodukt herstellt aus (I) dem in der ersten Stufe erhaltenen Trägerstoff, (II) Ethanol (III) Titantetrachlorid sowie (IV) Phthalsäuredi-n-butylester, derart, daß man zuerst

(1.2.1) in einer ersten Unterstufe in n-Heptan unter ständiger Durchmischung mittels Rühren bei Raumtemperatur den Trägerstoff (I) und das Ethanol (II) zusammenbringt - wobei mengenmäßig eingesetzt werden auf 1 Molteil Magnesium des Trägerstoffs (I) 3 Molteile des Ethanols (II) - und das Zusammengebrachte während 1,5 Stunden bei einer Temperatur im Bereich von 80 °C hält, anschließend

(1.2.2) in einer zweiten Unterstufe unter ständiger Durchmischung mittels Rühren bei Raumtemperatur in das aus der ersten Unterstufe resultierende Reaktionsgemisch das Titantetrachlorid (III) einbringt - wobei mengenmäßig eingesetzt werden auf 1 Molteil Magnesium des Trägerstoffs (I) 6 Molteile des Titantetrachlorids (III) - anschließend den Phthalsäuredi-n-butylester einbringt - wobei mengenmäßig eingesetzt werden auf 1 Molteil Magnesium des Trägerstoffs (I) 0,50 Molteile des Phthalsäureesters (IV) das Zusammengebrachte unter Rühren während 2 Stunden auf einer Temperatur im Bereich von 120 °C hält, und das dabei resultierende festphasige Zwischenprodukt unter Abtrennung der flüssigen Phase mittels Absaugen isoliert, dann

(1.3) in einer dritten Stufe das aus der zweiten Stufe erhaltene festphasige Zwischenprodukt bei einer Temperatur von 125 °C während einer Zeitspanne von 2 Stunden einer kontinuierlichen Extraktion mit einer Mischung aus Titantetrachlorid und Ethylbenzol, deren Anteil an Titantetrachlorid 15 Gew.% beträgt, unterzieht - wobei mengenmäßig eingesetzt werden auf 10 Gew.-Teile des aus der zweiten Stufe erhaltenen festphasigen Zwischenprodukts 140 Gew.-Teile des Titantetrachlorid/Ethylbenzol-Gemischs - hierauf das entstandene festphasige Zwischenprodukt mittels Filtration isoliert und schließlich

(1.4) in einer vierten Stufe das in der dritten Stufe gewonnene festphasige Produkt solange mit n-Heptan wäscht, bis das n-Heptan weniger als 0,3 Gew.% Titantetrachlorid enthält - und derart die Titankomponente (1) gewinnt; sie enthält 3,1 Gew.-% Titan, 7,5 Gew.-% Magnesium und 28,3 Gew.-% Chlor.

($\beta$)

Zudem wurde derart polymerisiert, daß

(a) in der ersten Polymerisationszone bei einem Gesamtdruck von 28 bar sowie einer Temperatur von 70 °C gearbeitet wurde, mit der Maßgabe, daß die mittlere Verweilzeit des Polymerisats 3,0 Stunden betrug,

(b) in der zweiten Polymerisationszone bei einem Gesamtdruck von 20 bar sowie einer Temperatur von 60 °C gearbeitet wurde, mit der Maßgabe, daß das Verhältnis Propylen-Partialdruck : Ethylen-Partialdruck 100 : 43 betrug,

(c) der Gesamtdruck in der ersten Polymerisationszone also um 8 bar höher gehalten wurde als der Gesamtdruck in der zweiten Polymerisationszone,

(d) das Verhältnis des in der ersten Polymerisationszone in Polymerisat umgesetztes Propylen : Gewicht des in der 2. Polymerisationszone in Polymerisat umgesetztes Gemisch aus Propylen und Ethylen den Wert 100 : 105 hatte, und

(e) die mittlere Verweilzeit des Polymerisats in der zweiten Polymerisationszone (1,47 Stunden) gleich der mittleren Verweilzeit des Polymerisats in der ersten Polymerisationszone (3,0 Stunden), multipliziert mit dem 1-fachen Quotienten stündlicher Austrag an Polymerisat aus der ersten Polymerisationszone (15,1 kg/h) : stündlicher Austrag an Polymerisat aus der zweiten Polymerisationszone (30,9 kg/h), d.h. 1,47 = 3,0•1•15,1:30,9 kg/h war.

Bei dieser Arbeitsweise entstand in der ersten Polymerisationszone ein Propylen-Homopolymerisat mit einem Schmelzindex (gemessen bei 230 °C, 2,16 bar) von 8 g/10' und in der zweiten Polymerisationszone ein Polymerisat mit einem Schmelzindex von 1,4 g/10'.

Der kontinuierliche Betrieb zur Erzeugung des Propylen-Ethylen-Polymerisats vom Typ der sog. "schlagzähmodifizierten Polypropylene" konnte auf die geschilderte Weise ohne Störungen durchgeführt werden; das erhaltene Verfahrensprodukt war zudem arm an anorganischen Nebenbestandteilen, insbesondere an Chlor und Titan deren Analyse ergab: Ti: < 1 ppm, Cl: 6 ppm, Al: 82 ppm, Mg: 2 ppm, Si: 3 ppm.

Zu den physikalischen Werten des erhaltenen Polymerisats siehe die nachstehende Tabelle.

Tabelle

| Schmelzindex (a) (230°C/2,16 kg) | Kornverteilung(b) <0,125 mm | 0,125-0,25 | 0,25-0,5 | 0,5-1,0 | 1,0-2,0 | >2 | mittlerer Korn-Ø(c) (mm) | Rieselfähigkeit(d) (g/s) | Kerbschlagzähigkeit(e) (kJ/m²) |
|---|---|---|---|---|---|---|---|---|---|
| 1,4 g/10 min | 0 % | 0,1 % | 0,3 % | 8,2 % | 62,5 % | 28,9 % | 1,92 | 32,3 | ohne Bruch |

(a) nach DIN 53 753
(b) durch Siebanalyse
(c) durch Siebanalyse
(d) nach DIN 53 492
(e) nach DIN 53 453

## Patentansprüche

1. Verfahren zum kontinuierlichen Herstellen von propylen-Ethylen-Polymerisaten vom Typ der sogenannten "schlagzähmodifizierten Polypropylene", wobei man jeweils in Anwesenheit von Wasserstoff als Molekulargewichtsregler in einem bewegten Festbett aus kleinteiligem Polymerisat bei Abwesenheit eines flüssigen Reaktionsmediums aus der Gasphase heraus zunächst

(A) in einer ersten Polymerisationszone Propylen durch Zufuhr eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$Al\,R_3$,

worin steht

R für einen nicht mehr als 8 Kohlenstoffatome aufweisenden Alkylrest,

sowie

(3) einer Silankomponente der Formel

$R^1_n\,Si(OR^2)_{4-n}$,

worin stehen $R^1$ für einen nicht mehr als 16 Kohlenstoffatome aufweisenden Kohlenwasserstoffrest gesättigt-aliphatischer und/oder aromatischer Natur, $R^2$ für einen nicht mehr als 15 Kohlenstoffatome aufweisenden Alkylrest, und n für eine Zahl von 0 bis 3,

homopolymerisiert, mit den Maßgaben, daß (i) das Atomverhältnis Titan aus der Titan-Komponente (1) : Aluminium aus der Aluminiumalkyl-Komponente (2) im Bereich von 1:10 bis 1:500 liegt, (ii) das Molverhältnis Aluminiumalkyl-Komponente (2) : Silankomponente (3) 1:0,01 bis 1:0,5 beträgt und (iii) pro Millimol der Aluminiumalkyl-Komponente (2) 0,05 bis 2 kg Polymerisat erzeugt werden, und dann

(B) in einer zweiten Polymerisationszone eine Gemisch aus Propylen und Ethylen durch Zufuhr des in der ersten Polymerisationszone erhaltenden Reaktionsgutes dem darin vorliegenden Propylen-Homopolymeren hinzupolymerisiert,

dadurch gekennzeichnet, daß man

($\alpha$)

als Titankomponente (1) eine solche einsetzt, die erhalten wird, indem man zunächst

(1.1) in einer ersten Stufe (I) einen Trägerstoff herstellt aus (Ia) einem feinteiligen Kieselgel, das einen Teilchendurchmesser von 1 bis 1000 $\mu$m, ein Porenvolumen von 0,3 bis 5 $cm^3/g$, eine Oberfläche von 100 bis 1000 $m^2/g$ besitzt, die Formel $SiO_2 \cdot a\,Al_2O_3$ - worin a steht für eine Zahl im Bereich von 0 bis 2 - hat und einen solchen Feuchtigkeitsgehalt aufweist, daß es bei einer Temperatur von 1000 °C im Verlauf von 0,5 Stunden 1 bis 20 Gew.% - bezogen auf das anfängliche Gesamtgewicht des Kieselgels - Wasser verliert, (Ib) einer magnesiumorganischen Verbindung der Formel $MgR^3R^4$ - worin $R^3$ und $R^4$ stehen für einen $C_2$- bis $C_{10}$-Alkylrest - und (Ic) einem gasförmigen Chlorierungsmittel der Formel ClZ - worin Z steht für Cl oder H -, derart, daß man zuerst

(1.1.1) in einer ersten Unterstufe in einem flüssigen inerten Kohlenwasserstoff unter ständiger Durchmischung bei einer Temperatur von 10 bis 120 °C das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10 Molteile der magnesiumorganischen Verbindung (Ib), und das Zusammengebrachte während 0,5 bis 5 Stunden bei einer Temperatur im Bereich von 20 bis 140 °C hält, dann

(1.1.2) in einer zweiten Unterstufe unter ständiger Durchmischung bei einer Temperatur im Bereich von -20 bis +80 °C in das aus der ersten Unterstufe Erhaltene das gasförmige Chlorierungsmittel (Ic) einleitet, wobei mengenmäßig eingesetzt werden auf 1 Molteil der magnesiumorganischen Verbindung (Ib) 2 bis 40 Molteile des Chlorierungsmittels (Ic), das Ganze 0,5 bis 5 Stunden bei einer Temperatur in dem genannten Bereich beläßt und das dabei resultierende festphasige Produkt - d.i. den Trägerstoff (I) - unter Abtrennung der flüssigen Phase isoliert,

daraufhin

(1.2) in einer zweiten Stufe ein festphasiges Zwischenprodukt herstellt aus (I), dem in der ersten Stufe erhaltenen Trägerstoff, (II) einem $C_1$- bis $C_8$-Alkanol, (III) Titantetrachlorid sowie (IV) einem Phthalsäureabkömmling der Formel

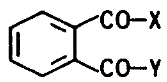

worin stehen X und Y gemeinsam für Sauerstoff oder X sowie Y für Chlor oder einen $C_1$- bis $C_{10}$-Alkoxyrest, derart, daß man zuerst

(1.2.1) in einer ersten Unterstufe in einem flüssigen inerten Kohlenwasserstoff unter ständiger Durchmischung bei Raumtemperatur den Trägerstoff (I) und den Alkanol (II) zusammenbringt, wobei mengenmäßig eingesetzt werden auf 1 Molteil Magnesium des Trägerstoffs (I) 1 bis 5 Molteile des Alkanols (II) und das Zusammengebrachte während 0,5 bis 5 Stunden bei einer Temperatur im Bereich von 20 bis 140 °C hält, anschließend

(1.2.2) in einer zweiten Unterstufe unter ständiger Durchmischung bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (I) 2 bis 20 Molteile des Titantetrachlorids (III), das Zusammengebrachte während 0,5 bis 5 Stunden auf einer Temperatur im Bereich von 10 bis 150 °C hält und das dabei resultierende festphasige Zwischenprodukt unter Abtrennung der flüssigen Phase isoliert,

mit der Maßgabe, daß zumindest im Zuge einer der Unterstufen (1.2.1) bis (1.2.2) der Phthalsäureabkömmling (IV) eingebracht wird, wobei mengenmäßig eingesetzt werden auf 1 Molteil Magnesium des Trägerstoffs (I) 0,01 bis 1 Molteile des Phthalsäureabkömmlings (IV), dann

(1.3) in einer dritten Stufe das aus der zweiten Stufe erhaltene festphasige Zwischenprodukt bei einer Temperatur im Bereich von 100 bis 150 °C während einer Zeitspanne von 0,2 bis 5 Stunden einer ein- oder mehrstufigen oder kontinuierlichen Extraktion mit Titantetrachlorid oder einer Mischung aus Titantetrachlorid und einem bis zu 12 Kohlenstoffatome aufweisenden Alkylbenzol, deren Gewichtsanteil an Titantetrachlorid mindestens 5 % beträgt, unterzieht, wobei mengenmäßig eingesetzt werden auf 10 Gewichtsteile des aus der zweiten Stufe erhaltenen festphasigen Zwischenprodukts insgesamt 10 bis 1000 Gew.-Teile des Extraktionsmittels, und schließlich

in einer vierten Stufe das in der dritten Stufe entstandene festphasige Produkt solange mit einem flüssigen inerten Kohlenwasserstoff wäscht, bis der Kohlenwasserstoff weniger als 2 Gew.% Titantetrachlorid enthält - und derart die Titankomponente (1) gewinnt,

sowie zudem

($\beta$)

derart polymerisiert, daß

(a) in der ersten Polymerisationszone bei einem Gesamtdruck von 20 bis 40 bar sowie einer Temperatur von 60 bis 90 °C gearbeitet wird, mit der Maßgabe, daß die mittlere Verweilzeit des Polymerisats 1,5 bis 5 Stunden beträgt,

(b) in der zweiten Polymerisationszone bei einem Gesamtdruck von 7 bis 25 bar sowie einer Temperatur von 40 bis 70 °C gearbeitet wird, mit der Maßgabe, daß das Verhältnis Propylen-Partialdruck : Ethylen-Partialdruck 100 : 20 bis 100 : 120 beträgt,

(c) der Gesamtdruck in der ersten Polymerisationszone um wenigstens 7 bar höher gehalten wird als der Gesamtdruck in der zweiten Polymerisationszone,

(d) das Verhältnis Gewicht des in der ersten Polymerisationszone in Polymerisat umgesetztes Propylen : Gewicht des in der zweiten Polymerisationszone in Polymerisat umgesetztes Gemisch aus Propylen und Ethylen einen Wert zwischen 100 : 40 bis 100 : 150 hat, und

(e) die mittlere Verweilzeit des Polymerisats in der zweiten Polymerisationszone gleich der mittleren Verweilzeit des Polymerisats in der ersten Polymerisationszone, multipliziert mit dem 0,8- bis 1,2-fachen Quotienten stündlicher Austrag an Polymerisat aus der ersten Polymerisationszone : stündlicher Austrag an Polymerisat aus der zweiten Polymerisationszone ist.

## Claims

**1.** A process for the continuous preparation of a propylene/ethylene polymer of the toughened polypropylene type, in which, in each case in the presence of hydrogen as a molecular weight regulator, in an agitated fixed bed of finely divided polymer, in the absence of a liquid reaction medium, from the gas phase, first

(A) in a first polymerization zone, propylene is homopolymerized by feeding in a Ziegler-Natta catalyst system consisting of

(1) a titanium component which is based on a finely divided, shape-imparting silica gel and contains titanium, magnesium, chlorine and a benzenecarboxylic acid derivative,

(2) an aluminum component of the formula

$Al\,R_3$,

where R is alkyl of not more than 8 carbon atoms, and

(3) a silane component of the formula

$R^1_n\,Si(OR^2)_{4-n}$

where $R^1$ is a saturated aliphatic and/or aromatic hydrocarbon radical of not more than 16 carbon atoms, $R^2$ is alkyl of not more than 15 carbon atoms and n is from 0 to 3,

with the provisos that (i) the atomic ratio of titanium from the titanium component (1) to aluminum from the aluminumalkyl component (2) is from 1 : 10 to 1 : 500, (ii) the molar ratio of aluminumalkyl component (2) to silane component (3) is from 1 : 0.01 to 1 : 0.5 and (iii) from 0.05 to 2 kg of polymer are produced per millimole of the aluminumalkyl component (2), and then

(B) in a second polymerization zone, a mixture of propylene and ethylene is polymerized with the propylene homopolymer present in the reaction mixture obtained in the first polymerization zone by feeding in the said reaction mixture,

wherein

($\alpha$)

the titanium component (1) used is one which is obtained by a method in which first

(1.1) in a first stage (I) a carrier is prepared from (Ia) a finely divided silica gel which has a particle diameter of from 1 to 1,000 $\mu$m, a pore volume of from 0.3 to 5 $cm^3/g$ and a surface area of from 100 to 1,000 $m^2/g$, is of the formula $SiO_2 \cdot a\,Al_2O_3$, where a is from 0 to 2, and has a moisture content such that it loses from 1 to 20% by weight, based on the initial total weight of the silica gel, of water at 1000 °C in the course of 0.5 hour, (Ib) an organomagnesium compound of the formula $MgR^3R^4$, where $R^3$ and $R^4$ are each $C_2$-$C_{10}$-alkyl, and (Ic) a gaseous chlorinating agent of the formula ClZ, where Z is Cl or H, by a method in which first

(1.1.1) in a first sub-stage, in a liquid inert hydrocarbon, with constant thorough mixing at from 10 to 120 °C, the finely divided silica gel (Ia) and the organomagnesium compound (Ib) are combined, from 1 to 10 molar parts of the organomagnesium compound (Ib) being used per 10 molar parts of silicon of the silica gel (Ia), and the combined substances are kept at from 20 to 140 °C, for from 0.5 to 5 hours, then

(1.1.2) in a second sub-stage, with constant thorough mixing at from -20 to +80 °C, the gaseous chlorinating agent (Ic) is passed into the mixture obtained from the first sub-stage, from 2 to 40 molar parts of the chlorinating agent (Ic) being used per molar part of the organomagnesium compound (Ib), the entire mixture is left at a temperature in the stated range for from 0.5 to 5 hours and the resulting solid-phase product, ie. the carrier (I), is isolated with removal of the liquid phase, thereafter

(1.2) in a second stage, a solid-phase intermediate is prepared from (I) the carrier obtained in the first stage, (II) a $C_1$-$C_8$-alkanol, (III) titanium tetrachloride and (IV) a phthalic acid derivative of the formula

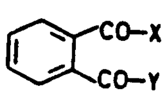

where X and Y together are oxygen or X and Y are each chlorine or $C_1$-$C_{10}$-alkoxy, by a method in which first

(1.2.1) in a first sub-stage, in a liquid inert hydrocarbon, with constant thorough mixing at room temperature, the carrier (I) and the alkanol (II) are combined, from 1 to 5 molar parts of the alkanol (II) being used per molar part of magnesium of the carrier (I), and the combined substances are kept at from 20 to 140 °C for from 0.5 to 5 hours, then

(1.2.2) in a second sub-stage, with constant thorough mixing at room temperature, the titanium tetrachloride (III) is introduced into the reaction mixture resulting from the first sub-stage, from 2 to 20 molar parts of the titanium tetrachloride (III) being used per molar part of magnesium of the carrier (I), the combined substances are kept at from 10 to 150 °C for from 0.5 to 5 hours, and the resulting solid-phase intermediate is isolated with removal of the liquid phase,

with the proviso that the phthalic acid derivative (IV) is introduced in the course of one or both of the sub-stages (1.2.1) and (1.2.2), from 0.01 to 1 molar part of the phthalic acid derivative (IV) being used per molar part of magnesium of the carrier (I), then

(1.3) in a third stage, the solid-phase intermediate obtained from the second stage is subjected, at from 100 to 150 °C, for from 0.2 to 5 hours, to a single-stage, multistage or continuous extraction with titanium tetrachloride or a mixture of titanium tetrachloride and an alkylbenzene of not more than 12 carbon atoms, which contains not less than 5% by weight of titanium tetrachloride, a total of from 10 to 1,000 parts by weight of the extracting agent being used per 10 parts by weight of the solid-phase intermediate obtained from the second stage, and finally

(1.4) in a fourth stage, the solid-phase product formed in the third stage is washed with a liquid inert hydrocarbon until the hydrocarbon contains less than 2% by weight of titanium tetrachloride, and the titanium component (1) is thus obtained,

and

($\beta$)

polymerization is carried out by a method in which

(a) in the first polymerization zone, the reaction is carried out under a total pressure of from 20 to 40 bar and at from 60 to 90 °C, with the proviso that the mean residence time of the polymer is from 1.5 to 5 hours,

(b) in the second polymerization zone, the reaction is carried out under a total pressure of from 7 to 25 bar and at from 40 to 70 °C, with the proviso that the ratio of the propylene partial pressure to the ethylene partial pressure is from 100 : 20 to 100 : 120,

(c) the total pressure in the first polymerization zone is kept at least 7 bar higher than the total pressure in the second polymerization zone,

(d) the ratio of the weight of the propylene converted into polymer in the first polymerization zone to the weight of the propylene/ethylene mixture converted into polymer in the second polymerization zone is from 100 : 40 to 100 : 150, and

(e) the mean residence time of the polymer in the second polymerization zone is equal to the mean residence time of the polymer in the first polymerization zone multiplied by 0.8-1.2 times the quotient of the amount of polymer discharged hourly from the first polymerization zone to the amount of polymer discharged hourly from the second polymerization zone.

## Revendications

**1.** Procédé de préparation continue de polymères propylène/éthylène du type du propylène dit "modifié résistant aux chocs", dans lequel, à chaque fois en présence d'hydrogène en tant qu'agent de régulation du poids moléculaire, dans un lit solide en mouvement de polymère sous forme de petites particules et en l'absence d'un milieu réactionnel fluide et en phase gazeuse,

(A) an homopolymérise tout d'abord, dans une première zone de polymérisation, du propylène par utilisation d'un système catalyseur Ziegler-Natta composé de

(1) un composant de titane qui est à base d'un gel de silice façonné finement dispersé et qui contient du titane, du magnésium, du chlore ainsi qu'un dérivé d'acide benzènecarboxylique,

(2) un composant d'aluminium de formule

$$Al\ R_3,$$

dans laquelle

R est mis pour un reste alkyle ne contenant pas plus de 8 atomes de carbone, ainsi que

(3) un composant silane de formule

$R^1_n\,Si(OR^2)_{4-n}$

dans laquelle
$R^1$ représente un reste hydrocarboné ne contenant pas plus de 16 atomes de carbone, de nature aliphatique saturée et/ou aromatique,
$R^2$ représente un reste alkyle ne présentant pas plus de 15 atomes de carbone, et
n est mis pour un nombre de 0 à 3,

pourvu que (i) le rapport atomique du titane provenant du composent de titane (1) à l'aluminium provenant du composent alkylaluminium (2) soit compris entre 1:10 et 1:500, (ii) le rapport molaire du composent alkylaluminium (2) au composent silane (3) soit compris entre 1:0,01 et 1:0,5 et (iii) l'on utilise 0,05 à 2 kg de polymère par mmol du composent alkylaluminium (2), puis

(B) dans une deuxième zone de polymérisation, on polymérise un mélange de propylène et d'éthylène sur l'homopolymère de propylène qui s'y trouve par introduction du produit de réaction obtenu dans la première zone de polymérisation,

caractérisé en ce que

($\alpha$)

en tant que composent du titane (1), on en utilise un qui a été préparé en ce que tout d'abord

(1.1) on prépare dans une première étape (I) un support à partir de (Ia) un gel de silice finement divisé qui présente un diamètre moyen de particules de 1 à 1000 $\mu$m, un volume de pores de 0,3 a 5 $cm^3/g$, une surface spécifique de 100 à 1000 $m^2/g$, qui a la formule $SiO_2 \cdot a\,Al_2O_3$, ou a est mis pour un nombre compris entre 0 et 2, et qui a une teneur en humidité telle qu'il perd de 1 à 20% en poids, par rapport au poids total de départ du gel de silice, d'eau à une température de 1000 °C en l'espace de 0,5 h, (Ib) un composé organomagnésien de formule $MgR^3R^4$, où $R^3$ et $R^4$ représentent un reste alkyle en $C_2$-$C_{10}$, et (Ic) un agent de chloration gazeux de formule ClZ, où Z est mis pour Cl ou H, de telle manière que d'abord

(1.1.1) dans une première sous-étape, on met en présence le gel de silice finement divisé (Ia) et le composé organomagnésien (Ib) dans un hydrocarbure inerte liquide sous agitation permanente à une température de 20 à 120 °C, en utilisant quant aux quantités 1 à 10 parties en moles du composé organomagnésien (Ib) pour 10 parties en moles de silicium du gel de silice (Ia), et l'on maintient les produits mis en présence pendant 0,5 à 5 h à une température comprise entre 20 et 140 °C, puis

(1.1.2) dans une deuxième sous-étape, on introduit l'agent de chloration gazeux (Ic) sous agitation permanente, à une température comprise entre -20 et +80 °C dans le produit obtenu dans la première sous-étape, en utilisant quant aux quantités 2 à40 parties en moles de l'agent de chloration (Ic) pour 1 partie en moles du composé organomagnésien (Ib), on laisse le tout pendant 0,5 à 5 h à une température dans l'intervalle sus-indiqué puis on isole le produit solide ainsi obtenu - c'est-à-dire le support (I) - par séparation de la phase liquide, après quoi

(1.2) dans une deuxième étape, on prépare un produit intermédiaire solide à partir de (I) le support obtenu dans la première étape, (II) un alcanol en $C_1$-$C_8$, (III) du tétrachlorure de titane ainsi que (IV) un dérivé d'acide phtalique de formule

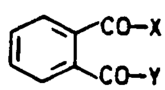

dans laquelle X et Y sont mis ensemble pour un atome d'oxygène ou bien X ainsi que Y sont mis pour un atome de chlore ou pour un reste alcoxy en $C_1$-$C_{10}$, de telle manière que d'abord

(1.2.1) dans une première sous-étape, on met en présence le support (I) et l'alcanol (II) dans un hydrocarbure inerte liquide sous agitation permanente à la température ambiante, en utilisant quant aux quantités 1 à 5 parties en moles de l'alcanol (II) pour 1 partie en moles du magnésium du support (I) et on maintient les produits mis en présence pendant 0,5 à 5 h à une température comprise entre 20 et 140 °C, puis

(1.2.2) dans une deuxième sous-étape, on introduit le tétrachlorure de titane (III) dans le mélange réactionnel résultant de la première sous-étape, sous agitation permanente à la température ambiante, en utilisant quant aux quantités de 2 à 20 parties en moles du tétrachlorure de titane

(III) pour une partie en moles du magnésium du support (I), on laisse les produits en présence pendant 0,5 à 5 h à une température comprise entre 10 et 150 °C et on isole le produit intermédiaire solide ainsi obtenu par séparation de la phase liquide, pourvu que l'on introduise le dérivé d'acide phtalique (IV) au moins pour l'une des deux sous-étapes (1.2.1) et (1.2.2), en utilisant quant aux quantités de 0,01 à 1 partie en moles du dérivé d'acide phtalique (IV) pour 1 partie en moles de magnésium du support (I), puis

(1.3) dans une troisième étape, on soumet le produit intermédiaire solide obtenu dans la deuxième étape à une extraction en une ou plusieurs étapes ou en continu avec du tétrachlorure de titane ou un mélange de tétrachlorure de titane et d'un alkylbenzène contenant jusqu'à 12 atomes de carbone ayant une teneur en poids de tétrachlorure de titane d'au moins 5%, à une température comprise entre 100 et 150 °C en 0,2 à 5 h, en utilisant quant aux quantités au total de 10 à 1000 parties en poids du milieu d'extraction pour 10 parties en poids du produit intermédiaire solide obtenu dans la deuxième étape, et enfin dans une quatrième étape, on lave le produit solide obtenu dans la troisième étape à l'aide d'un hydrocarbure inerte liquide jusqu'à ce que l'hydrocarbure contienne moins de 2% en poids de tétrachlorure de titane, et on récupère le composant de titane (I), et en outre

($\beta$)

on polymérise de telle manière que

(a) dans la première zone de polymérisation, on travaille à une pression totale de 20 à 40 bar ainsi qu'à une température de 60 à 90 °C, pourvu que le temps de séjour moyen du polymère soit de 1,5 à 5 h,

(b) dans la deuxième zone de polymérisation, on travaille à une pression totale de 7 à 25 bar ainsi qu'à une température de 40 à 70 °C, pourvu que le rapport de la pression partielle de propylène à la pression partielle d'éthylène soit compris entre 100:20 et 100:120,

(c) la pression totale dans la première zone de polymérisation est maintenue à au moins 7 bar de plus que la pression totale dans la deuxième zone de polymérisation,

(d) le rapport du poids du propylène transformé en polymère dans la première zone de polymérisation au poids du mélange de propylène et d'éthylène transformé en polymère dans la deuxième zone de polymérisation a une valeur comprise entre 100:40 et 100:150, et

(e) le temps de séjour moyen du polymère dans la deuxième zone de polymérisation est similaire au temps de séjour moyen du polymère dans la première zone de polymérisation, multiplié par 0,8 à 1,2 fois le quotient de la production horaire de polymère dans la première zone de polymérisation par la production horaire de polymère dans la deuxième zone de polymérisation.